# EUROPEAN PATENT SPECIFICATION

(11) **EP 1 305 215 B1**
(45) Date of publication and mention of the grant of the patent: **12.05.2004**
(21) Application number: 01963373.4
(22) Date of filing: 26.07.2001
(51) Int. Cl.: B65B 35/24, B65G 47/08

(54) **SYSTEM AND METHOD OF FEEDING A PACKAGING MACHINE**
VORRICHTUNG UND VERFAHREN ZUM BESCHICKEN EINER VERPACKUNGSMASCHINE
SYSTEME ET PROCEDE POUR ALIMENTER UNE MACHINE D'EMBALLAGE

(30) Priority: 28.07.2000 IT TO000754
(43) Date of publication of application: 02.05.2003
(73) Proprietor: Synchrosys S.r.l., 10146 Torino (IT)
(72) Inventor: ALOTTO, Valerio, I-10100 Torino (IT)
(74) Representative: Jorio, Paolo
(86) International application number: PCT/IT2001/000408
(87) International publication number: WO 2002/010018

(56) References cited:
- US-A- 4 768 642
- US-A- 5 339 606

## Description

### TECHNICAL FIELD

The present invention relates to a system and method of feeding a packaging machine.

### BACKGROUND ART

Packaging machine feed systems are known wherein a conveying system travels between an input for receiving a number of stacks of objects, and an output for feeding the stacks sequentially to the input of a packaging machine, which forms adjacent groups of stacks and arrange them in a package (e.g. the groups are wrapped in a tubular package of plastic material).

Known conveying systems normally comprise a number of pushers movable with respect to a supporting surface and spaced in a (normally straight) feed direction, and each of which is brought into contact with a respective stack to push it along the supporting surface to the output of the feed system.

The stacks of objects may be fed downwards to the input, i.e. released by gravity from an unloading station located over the supporting surface, or may be fed laterally, i.e. pushed onto the supporting surface in a direction crosswise to the feed direction.

Whichever the case, in known feed systems, the stacks are fed onto the supporting surface while the pushers are moving, and impact between the pusher and the respective stack is severe enough to produce a series of drawbacks, including:
. damage to the objects in the stack - especially when the objects are made of crumbly material, such as baked food products (biscuits, cakes, wafers);
. damage to the stack itself, which is pushed out of shape; and
. destruction of the stack, so that the objects topple onto the supporting surface.

All of which drawbacks obviously impair, if not prevent, performance of the follow-up packaging process.

### DISCLOSURE OF INVENTION

It is an object of the present invention to provide a feed system designed to eliminate the drawbacks typically associated with known systems.

More specifically, it is an object of the present invention to prevent sharp contact between the pushers and stacks, so as to safeguard the structure of the stack and/or prevent damage to the objects.

According to the present invention, there is provided a system for feeding a packaging machine, as claimed in Claim 1.

The present invention also relates to a method of feeding a packaging machine, as claimed in Claim 10.

### BRIEF DESCRIPTION OF THE DRAWINGS

A preferred, non-limiting embodiment of the invention will be described by way of example with reference to the accompanying drawings, in which:
Figure 1 shows a simplified side view of a system for feeding a packaging machine, in accordance with the present invention and in a first operating position;
Figure 2 shows the Figure 1 system in a second operating position;
Figure 3 shows the Figure 1 system in a third operating position;
Figure 4 shows a view in perspective of a portion of the Figure 1 system;
Figure 5 shows a cross section (plane A-A in Figure 1) of a central portion of the Figure 1 system;
Figure 6 shows a cross section (plane B-B in Figure 1) of a first end portion of the Figure 1 system;
Figure 7 shows a cross section (plane C-C in Figure 1) of a second end portion of the Figure 1 system;
Figure 8 shows operations performed by the feed system according to the present invention.

### BEST MODE FOR CARRYING OUT THE INVENTION

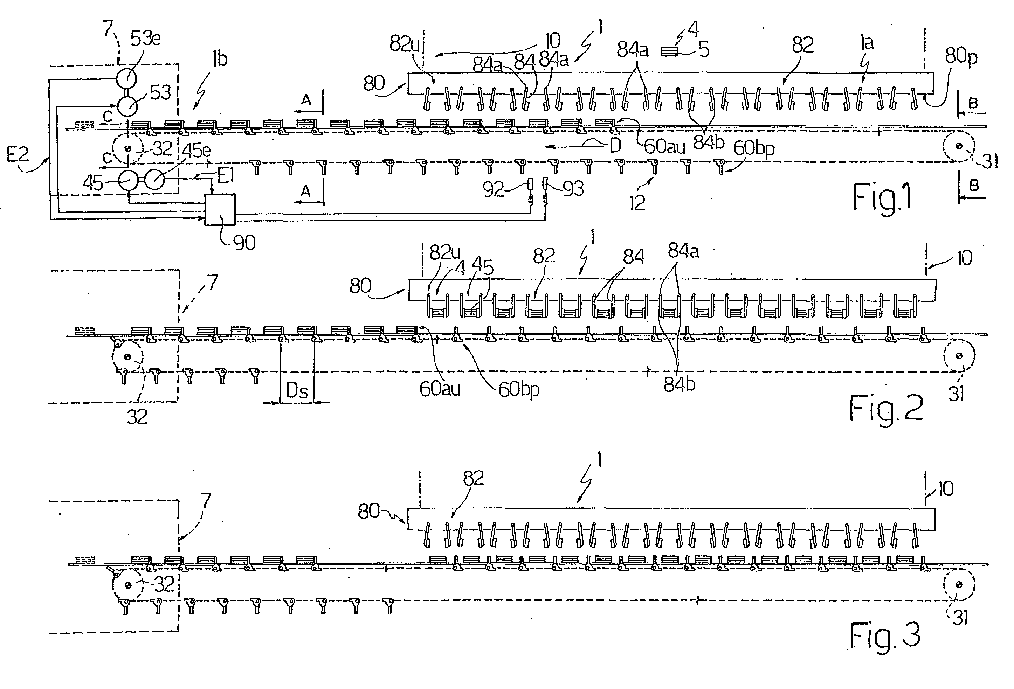

Number 1 in Figure 1 indicates as a whole a system for feeding a packaging machine.

More specifically, feed system 1 receives stacks 4 of objects 5 at an input 1a, and feeds stacks 4 in a straight feed direction D to an output 1b of feed system 1 where stacks 4 are fed sequentially to a known packaging machine 7, which forms stacks 4 into groups and packs the groups of stacks in respective packages (not shown) to pack objects 5.

Preferably, though not necessarily, objects 5 comprise substantially flat (e.g. disk- or parallelepiped-shaped) food products arranged one on top of the other to form stacks of two-four objects. Examples of flat food products are baked food products such as cakes, tarts, biscuits, snacks and wafers, though feed system 1 may obviously be used for feeding objects 5 of any stackable shape.

Each object 5 may also be individually wrapped, e.g. in a tubular sheet wrapping (not shown), so that each stack 4 is defined by individually wrapped objects 5, e.g. a number of (e.g. three) individually wrapped disk-shaped cakes.

Objects 5 are made in a production device (e.g. an oven (not shown) for food products) and are fed to a known stacking device 10 for forming a number of stacks 4 of objects 5, each stack comprising the same number of objects 5 (in the example shown, each stack 4 comprises three objects 5). Each group of stacks 4 supplied by device 10 is also known as a batch.

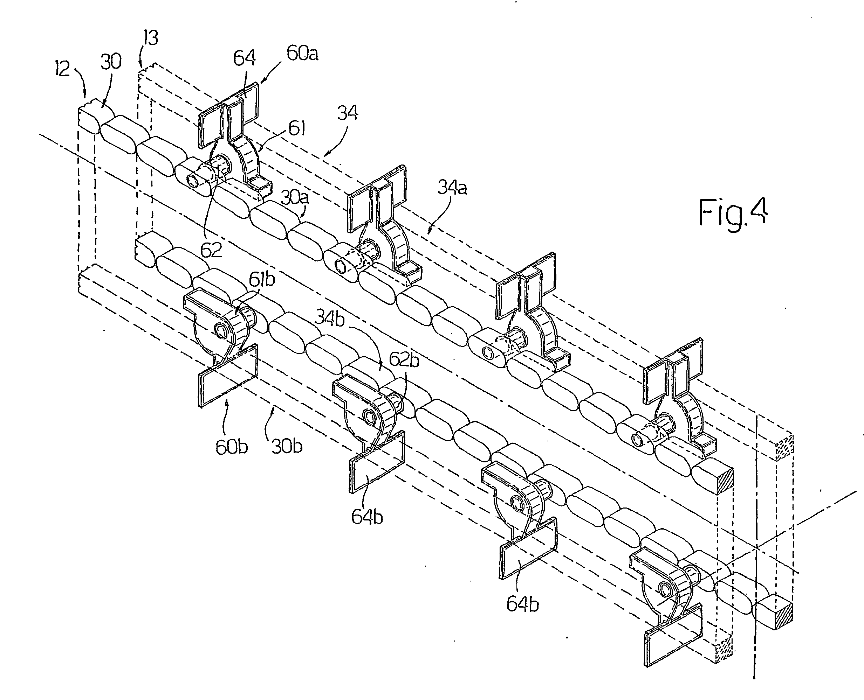

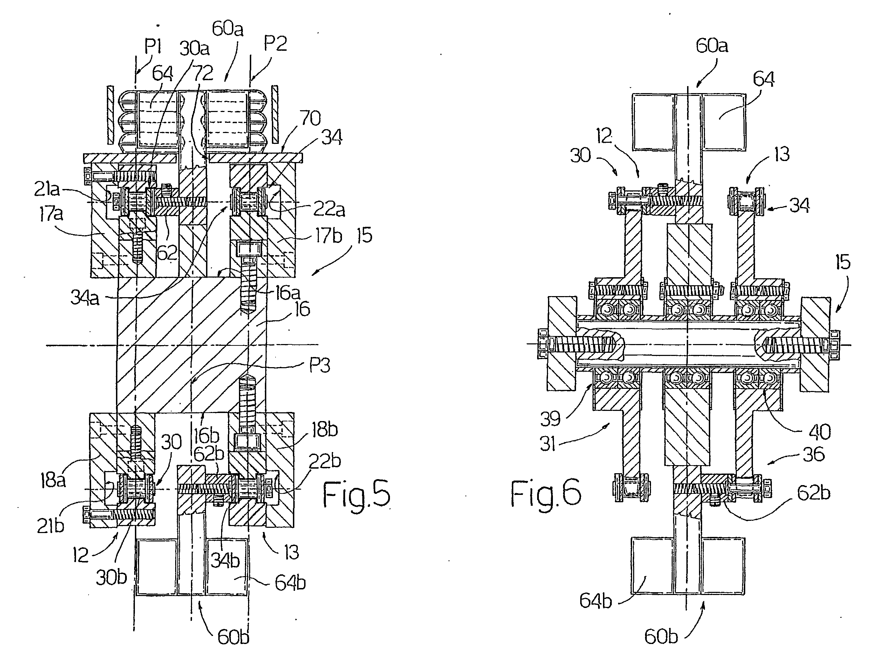

Feed system 1 comprises a first straight linear conveying system 12 and a second straight linear conveying system 13 (Figures 4 and 5) extending parallel to each other between input 1a and output 1b.

More specifically, feed system 1 comprises a bed (not shown) supporting an elongated supporting structure 15 (Figure 5) defined by an elongated, parallelepiped-shaped central member 16, from opposite faces 16a, 16b of which extend pairs of flat walls 17a, 17b, 18a, 18b perpendicular to respective faces 16a, 16b. Walls 17a and 18a are parallel to a first vertical plane P1, and walls 17b and 18b are parallel to a second vertical plane P2 parallel to plane P1.

Walls 17a and 18a define respective first straight elongated seats 21a, 21b extending parallel to each other in direction D, and walls 17b and 18b define respective second straight elongated seats 22a, 22b also extending parallel to each other in direction D.

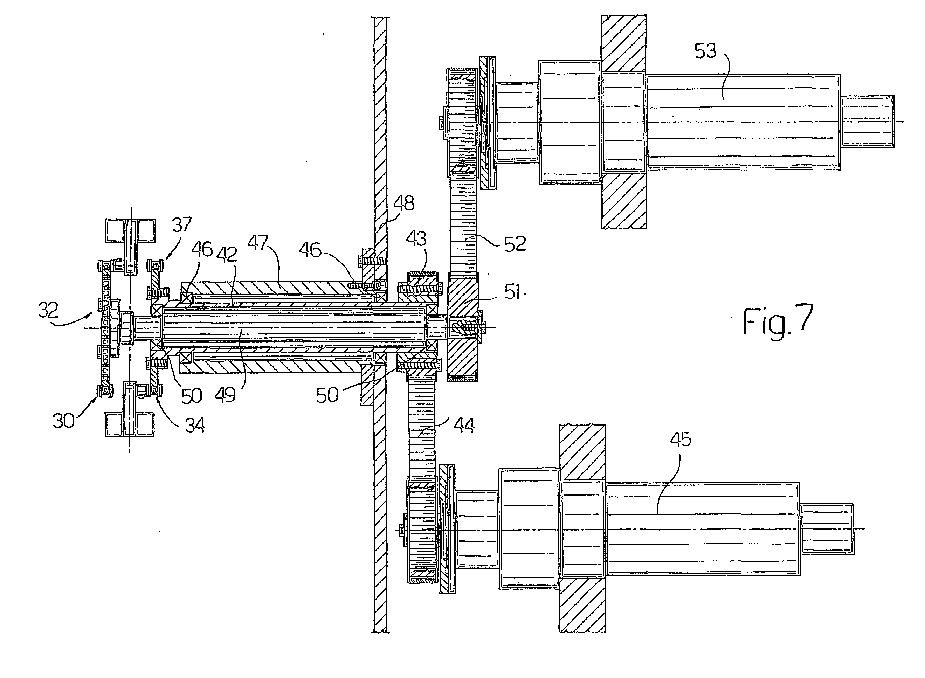

First conveying system 12 comprises a first powered chain 30 extending between toothed end pulleys 31, 32 (Figure 1) and comprising a straight top portion 30a housed and guided inside seat 21a, and a straight bottom portion 30b housed and guided inside seat 21b. Similarly, second conveying system 13 comprises a second powered chain 34 extending between toothed end pulleys 36, 37 (Figures 6 and 7) and comprising a straight top portion 34a housed and guided inside seat 22a, and a straight bottom portion 34b housed and guided inside seat 22b.

Figure 6 shows pulleys 31 and 36 located at the end of elongated supporting structure 15 away from packaging machine 7 and close to stacking device 10. More specifically, pulleys 31 and 36 are idle and supported on respective bearings 39, 40 fitted to supporting structure 15.

Figure 7 shows pulleys 32 and 37 located at the end of elongated supporting structure 15 close to packaging machine 7. More specifically, pulley 37 is connected to a first end of a tubular sleeve 42, a second end of which is fitted with a toothed pulley 43 rotated, via a toothed belt 44, by an electric motor 45 fitted to the bed. Tubular sleeve 42 is also fitted, via the interposition of two ball bearings 46, to a metal tube 47 projecting from a wall 48 of the bed, so that power is transmitted from motor 45 to pulley 37 to drive chain 34. Pulley 32, on the other hand, is located at a first end of a shaft 49 housed coaxially inside tubular sleeve 42 and connected to tubular sleeve 42 via the interposition of two bearings 50. A second end of shaft 49 projects from tubular sleeve 42 and is fitted to a toothed pulley 51 connected by a toothed belt 52 to the output shaft of an electric motor 53 fitted to the bed, so that power is transmitted from motor 53 to pulley 32 to drive chain 30.

First chain 30 has a first number of first pushers 60a (Figures 4 and 5) equally spaced along chain 30 and movable in direction D. More specifically, each pusher 60a comprises a substantially L-shaped central body 61 connected to a link of chain 30 by a respective pin 62 extending from a central portion of the L-shaped body and perpendicular to plane P1 and to the traveling direction D of chain 30. Each pusher 60a also comprises a rectangular supporting wall 64 carried by one leg of the L-shaped body and perpendicular to direction D and to planes P1, P2. Each central body 61 is housed between chains 30 and 34, and is movable along a plane P3 (Figure 5) located between, parallel to, and equidistant from planes P1, P2, so that supporting walls 64 are also movable in direction D while remaining perpendicular to planes P1 and P2.

Second chain 34 has a second number of second pushers 60b equally spaced along chain 34 and movable in direction D. More specifically, each pusher 60b has the same structure as pushers 60a and comprises a substantially L-shaped central body 61b connected to a respective link of chain 34 by a respective pin 62b extending from a central portion of the L-shaped body and perpendicular to plane P2 and to the traveling direction D of chain 34. Each pusher 60b also comprises a rectangular supporting wall 64b perpendicular to direction D and to planes P1, P2. Each central body 61b is housed between chains 30 and 34, and is movable along plane P3, so that supporting walls 64b are also movable in direction D while remaining perpendicular to planes P1 and P2.

Pushers 60a and 60b are therefore movable along the same plane P3, but are prevented from coming into contact with one another by only extending along portions of respective chains 30 and 34, and by chains 30 and 34 being so controlled that the portions of chains 30, 34 supporting pushers 60a and 60b are never positioned alongside each other.

System 1 also comprises a rectangular supporting surface 70 (Figure 5), which is fitted to supporting structure 15, in particular is fixed firmly to walls 17a, 17b, and has a straight central slot 72 extending in direction D.

Plane P3 extends through the longitudinal axis of slot 72, which is wide enough to let through the leg of central body 61, 61b supporting wall 64, 64b, so that first and second pushers 60a, 60b are movable with respect to supporting surface 70. More specifically, when the legs engage slot 72, supporting walls 64, 64b are located on the opposite side of supporting surface 70 to chains 30, 34 and are perpendicular to supporting surface 70.

Stacking device 10 comprises an unloading station 80 (Figures 1, 2 and 3) for simultaneously depositing a number of stacks 4 on surface 70. More specifically, unloading station 80 comprises a number of unloading units 82 equally spaced in direction D and for each depositing a respective stack 4 onto surface 70.

In the embodiment shown, each unloading unit 82 is located over surface 70 and comprises two oscillating arms 84 having first ends 84a hinged to an edge 80p of unloading station 80, and second ends 84b with C-shaped gripping portions. Arms 84 are movable between a gripping position (Figure 2) in which they are parallel and grip a stack 4, and an unloading position (Figures 1 and 3) in which arms 84 are parted to release stack 4 onto surface 70.

Feed system 1 is controlled by an electronic control unit 90, which powers motors 53 and 45 to control the movement of first chain 30 and second chain 34 independently. Motors 45 and 53 are also connected to respective encoders 45e and 53e, which supply control unit 90 with feedback signals E1, E2 to indicate instantaneously and continuously the position of chains 30, 34 and pushers 60a, 60b in direction D. Control unit 90 also communicates with sensors 92, 93 (e.g. inductive sensors - shown schematically) for detecting the passage of pushers 60a, 60b respectively through a reference position.

Electronic control unit 90 also cooperates with unloading station 80.

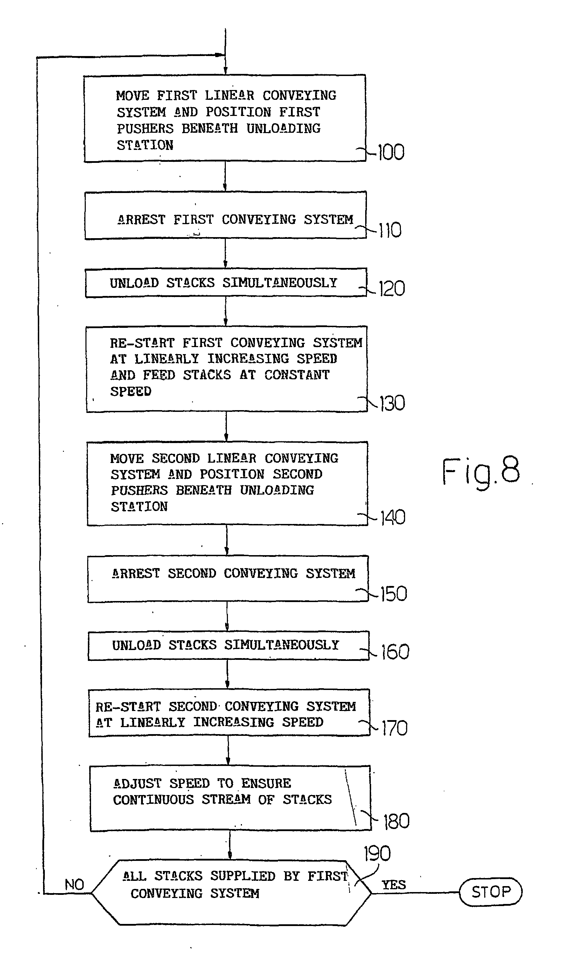

Operation of feed system 1 under the control of electronic unit 90 is shown in Figure 8, which shows a logic diagram of the operations performed to control the first and second conveying system.

To begin with, a first block 100 operates first linear conveying system 12 (i.e. powers motor 53 and operates chain 30) to position first pushers 60a beneath unloading station 80.

First conveying system 12 is then arrested (block 110 downstream from block 110) with each supporting wall 64 located between two adjacent unloading units 82.

Block 110 is followed by a block 120 which commands unloading station 80 to unload stacks 4 simultaneously : arms 84 are controlled synchronously to move into the unloading position and release stacks 4 onto supporting surface 70. More specifically, each stack 4 comes to rest on surface 70 close to a respective supporting wall 64, with which it does not interfere as it drops down.

While the operations in blocks 100, 110 and 120 are being performed, second linear conveying system 13 is so positioned as to prevent second pushers 60b from interfering with first pushers 60a. More specifically, during the above operations, second linear conveying system 13 feeds stacks 4 to the input of packaging machine 7.

Block 120 is followed by a block 130, which re-starts and linearly increases the speed of first conveying system 12 in controlled manner, so that each wall 64 moves with respect to and is brought gently into contact with the adjacent stack 4 to prevent any damage to stack 4 or objects 5 in stack 4.

Stacks 4 are thus pushed by pushers 60a and fed (at preferably constant speed) by first conveying system 12 in straight direction D to output 1b and packaging machine 7 (Figure 1). More specifically, packaging machine 7 is fed with a stream of stacks 4 of objects 5 traveling at constant speed.

After feeding stacks 4 to packaging machine 7, pushers 60a rotate about pulley 32 back to input 1a.

Block 130 is followed by a block 140, which operates second conveying system 13 to position second pushers 60b beneath unloading station 80.

More specifically, when the last of the first pushers 60au (i.e. the trailing pusher 60a furthest away from output 1b in direction D) moves away from the last unloading unit 82u at unloading station 80 (i.e. the unloading unit 82 closest to output 1b), the first of the second pushers 60bp (i.e. the leading pusher 60b in the traveling direction of conveying system 13) can be positioned beneath the last unloading unit 82u (Figures 2 and 3).

Block 140 is followed by a block 150, which, at this point, arrests second conveying system 13 with each supporting wall 64b located between two adjacent unloading units 82.

Block 150 is followed by a block 160 which commands unloading station 80 to unload stacks 4 simultaneously : arms 84 are controlled synchronously to move into the unloading position and release stacks 4 onto supporting surface 70. While the operations in blocks 140, 150 and 160 are being performed, first linear conveying system 12 is so positioned as to prevent first pushers 60a from interfering with second pushers 60b. More specifically, during the above operations, first conveying system 12 feeds stacks 4 to output 1b and packaging machine 7.

Second conveying system 13 is then re-started (block 170 downstream from block 160) and increased linearly in speed (as in block 130), so that walls 64b are brought gently into contact with stacks 4, which are thus fed in direction D. More specifically, the speed of second conveying system 13 is adjusted (in particular, is increased, reduced and then maintained constant - block 180 downstream from block 170) so that the leading pusher 60bp (i.e. the pusher 60b closest to output 1b) is positioned adjacent to the trailing pusher 60au (i.e. in this case, the pusher 60a furthest from output 1b) with a constant spacing between pushers 60a, 60b, so as to ensure a continuous stream of stacks 4 to output 1b and therefore to the input of packaging machine 7.

More specifically, the distance, in direction D, between the trailing pusher 60au and the leading pusher 60bp is made equal to the distance between two adjacent pushers 60a, 60b.

Packaging machine 7 receives stacks 4 supplied, with no interruptions and with the same spacing Ds between one stack and the next, by first conveying system 12 and second conveying system 13. When the first conveying system completes supply of stacks 4 (block 190 downstream from block 180), supply is continued by system 13, and block 190 goes back to block 100 to supervise the loading of further stacks 4 onto conveying system 12.

The operations in blocks 100-190 are then repeated to ensure a continuous supply of stacks to output 1b by conveying systems 12 and 13.

The advantages of the present invention will be clear from the foregoing description:
. stacks 4 of objects 5 are fed onto surface 70 with pushers 60a, 60b stationary with respect to supporting surface 70, thus preventing any impact between pushers 60a, 60b and the stacks, and any damage to the stack or objects;
. employing two independently controlled conveying systems, as described above and shown in Figure 8, provides, despite arresting the first and second conveying system (blocks 110 and 150), for ensuring a continuous stream of stacks and, hence, continuous constant supply to the input of packaging machine 7.

Clearly, changes may be made to the packaging machine feed system as described herein without, however, departing from the scope of the present invention.

## Claims

1. A feed system for feeding a packaging machine, and which simultaneously receives a number of stacks (4) at an input (1a) and sequentially feeds said stacks in a traveling direction (D) to an output (1b) communicating with said packaging machine (7); each said stack being defined by at least two superimposed flat objects (5); and the feed system being **characterized by** comprising:
- a first conveying system (12) having a number of first pushers (60a) for moving said stacks from said input (1a) to said output (1b);
- a second conveying system (13) having a number of second pushers (60b) for moving said stacks from said input (1a) to said output (1b);
said first and said second conveying system (12, 13) being powered by respective first and second drive means (53, 45) controlled by an electronic control unit (90) to set said first pushers (60a) or said second pushers (60b) to a stop position (110, 150) at said input (1a) during supply of said number of stacks to said input, while said other pushers feed the stacks of a preceding number of stacks to the output (1b) of said feed system; said electronic control unit regulating the movement of said first conveying system (12) and said second conveying system (13) to ensure a continuous stream of stacks (4) of objects to the output (1b) of said feed system.

2. A feed system as claimed in Claim 1, **characterized in that** said input (1a) cooperates with an unloading station (80) for feeding said stacks to the first and second conveying system; said electronic control unit comprising:
- first control means (100) for controlling the movement of the first conveying system (12) to set said first pushers (60a) to an unloading position at said unloading station (80);
- first stop means (110) for arresting the first conveying system (12) with said first pushers in the unloading position;
- first unloading means (120) for emitting a command to unload the stacks (4); each stack being positioned close to a respective first pusher (60a) with which it does not interfere during the unloading operations;
- first re-starting means (130) for re-starting the first conveying system (12), the speed of which increases in controlled manner; each first pusher moving with respect to the adjacent stack (4) and being brought gently into contact with said stack (4);
said first re-starting means (130) ensuring said stacks (4) are fed in said traveling direction (D) to said output (1b);
- second control means (140) for controlling the movement of the second conveying system (13) to set said second pushers (60b) to said unloading position;
- second stop means (150) for arresting the second conveying system (13) with said second pushers in the unloading position;
- second unloading means (160) for emitting a command to unload the stacks (4); each stack being positioned close to a respective second pusher (60b) with which it does not interfere during the unloading operations;
- second re-starting means (170) for re-starting the second conveying system (13), the speed of which increases in controlled manner; each second pusher moving with respect to the adjacent stack (4) and being brought gently into contact with said stack (4);
said second re-starting means (170) ensuring said stacks (4) are fed in said traveling direction (D) at a speed so regulated that a leading pusher (60bp) forming part of the second pushers is positioned adjacent to a trailing pusher (60au) forming part of the first pushers, so as to ensure a continuous stream of stacks (4) to the output (1b) of the feed system.

3. A feed system as claimed in Claim 2, **characterized in that** said first re-starting means (130) re-start the first conveying system (12) and increase said speed linearly; and said second re-starting means (170) re-start the second conveying system (13) and increase said speed linearly.

4. A feed system as claimed in Claim 2 or 3, **characterized in that** said second re-starting means (170) adjust the distance (Ds), in said traveling direction (D), between said trailing pusher (60au) and said leading pusher (60bp) so that it equals the distance between two adjacent pushers (60a, 60b).

5. A feed system as claimed in any one of the foregoing Claims, **characterized in that** said first conveying system (12) is linear and conveys said stacks (4) in a straight traveling direction (D); said second conveying system (13) being linear and conveying said stacks (4) in said straight traveling direction (D).

6. A feed system as claimed in any one of the foregoing Claims, **characterized in that** said first pushers (60a) and said second pushers (60b) are movable along the same plane (P3); said electronic control unit (90) controlling the first conveying system (12) and the second conveying system (13) so that said first pushers and said second pushers are not positioned alongside, and do not come into contact with, one another.

7. A feed system as claimed in any one of the foregoing Claims, **characterized in that** said first conveying system (12) comprises a powered first chain (30); said first pushers being spaced along a portion of said first chain (30) and being carried by links of said first chain (30); said second conveying system (13) comprising a powered second chain (34); and said second pushers being spaced along a portion of said second chain (34) and being carried by links of said second chain (34).

8. A feed system as claimed in Claim 7, **characterized in that** each first pusher (60a) comprises a central body (61) connected to a link of the first chain (30) by a respective pin (62) extending from the central body (61) and crosswise to the traveling direction (D) of the first chain (30); each second pusher (60b) comprising a central body (61b) connected to a link of the second chain (34) by a respective pin (62b) extending from the central body (61b) and crosswise to the traveling direction (D) of the second chain (34).

9. A feed system as claimed in Claim 8, **characterized in that** each first pusher (60a) comprises a supporting wall (64) carried by a leg extending from said central body (61); said supporting wall being perpendicular to the traveling direction (D); each second pusher (60b) comprising a supporting wall (64b) carried by a leg extending from said central body (61b); and said supporting wall being perpendicular to the traveling direction (D).

10. A method of feeding stacks of objects to a packaging machine; said stacks (4) moving sequentially in a traveling direction (D) extending between a supply input (1a) and an output (1b) of a feed system, said output communicating with said packaging machine; and the method being **characterized by** comprising the steps of:
- simultaneously feeding a number of stacks to a first conveying system (12) having a number of first pushers (60a) for moving said stacks from said input (1a) to said output (1b);
- simultaneously feeding a number of stacks to a second conveying system (13) having second pushers (60b) for moving said stacks from said input (1a) to said output (1b);
- controlling (90, 110, 150) said first and said second conveying system (12, 13) to set said first pushers or said second pushers to a stop position at said input (1a) during supply of said stacks to said input, while said other pushers feed the stacks of a preceding number of stacks to the output (1b) of said feed system;
- adjusting (90, 100-190) the movement of said first conveying system and said second conveying system to ensure a continuous stream of stacks to the output of said feed system.

11. A method as claimed in Claim 10, **characterized in that** said adjusting step comprises the steps of:
- commanding (100) movement of the first conveying system (12) to set said first pushers (60a) to an unloading position at an unloading station (80) for feeding said stacks of objects to said input;
- arresting (110) the first conveying system (12) with said first pushers in the unloading position;
- imparting (120) a command to unload the stacks; each stack being positioned close to a respective first pusher (60a), with which it does not interfere during the unloading operations;
- re-starting (130) the first conveying system (12) and controlling the speed of the first conveying system so that each first pusher moves with respect to the adjacent stack (4) and is brought gently into contact with said stack (4);
- feeding said stacks (4) in the traveling direction (D) to said output (1b);
- commanding (140) movement of the second conveying system (13) to set said second pushers (60b) to said unloading position;
- arresting (150) the second conveying system (13) with said second pushers in the unloading position;
- imparting (160) a command to unload the stacks (4); each stack being positioned close to a respective second pusher (60b), with which it does not interfere during the unloading operations;
- re-starting (170) the second conveying system (13) and controlling the speed of the second conveying system so that each second pusher moves with respect to the adjacent stack (4) and is brought gently into contact with said stack (4);
- feeding said stacks (4) in the traveling direction (D) at a speed so regulated that a leading pusher (60bp) forming part of the second pushers and closest to the output (1b) is positioned adjacent to a trailing pusher (60au) forming part of the first pushers and furthest from the output (1b), so as to ensure a continuous stream of stacks (4) to the output (1b) of the feed system.

## Patentansprüche

1. Beschickungssystem zum Beschicken einer Verpackungsmaschine, die gleichzeitig eine Anzahl von Stapeln (4) an eine Eingabe (1a) empfängt und die Stapel sequentiell in einer Bewegungsrichtung (D) zu einer Ausgabe (1b) zuführt, die mit der Verpackungsmaschine (7) in Kommunikation steht; wobei jeder Stapel durch wenigstens zwei übereinanderliegende, flache Gegenstände (5) definiert ist; und wobei das Beschickungssystem **dadurch gekennzeichnet ist, dass** es umfasst:
- ein erstes Fördersystem (12) mit einer Anzahl von ersten Schiebern (60a) zum Bewegen der Stapel von der Eingabe (1a) zu der Ausgabe (1b);
- ein zweites Fördersystem (13) mit einer Anzahl von zweiten Schiebern (60b) zum Bewegen der Stapel von der Eingabe (1a) zu der Ausgabe (1b);
wobei das erste und zweite Fördersystem (12, 13) mit entsprechenden ersten und zweiten Antriebsmitteln (53, 45) betrieben werden, die durch eine elektronische Steuereinheit besteuert werden, um die ersten Schieber (60a) oder die zweiten Schieber (60b) während der Zufuhr der Anzahl von Stapel an die Eingabe auf eine Stop-Position (110, 150) an der Eingabe (1a) einzustellen, während die anderen Schieber die Stapel einer vorhergehenden Anzahl von Stapeln zu der Ausgabe (1b) des Beschickungssystems zuführen; wobei die elektronische Steuereinheit die Bewegung des ersten Fördersystems (12) und des zweiten Fördersystems (13) steuert, um einen kontinuierlichen Strom von Stapeln (4) von Gegenständen zu der Ausgabe (1b) des Beschickungssystems sicherzustellen.

2. Beschickungssystem nach Anspruch 1, **dadurch gekennzeichnet, dass** die Eingabe (1a) mit einer Entladestation (80) zusammenwirkt, um die Stapel an das erste und das zweite Fördersystem zu zuführen; wobei die elektronische Steuereinheit umfasst:
- ein erstes Steuermittel (110) zum Steuern der Bewegung des ersten Fördersystems (12), um die ersten Schieber (60a) auf einer Entladeposition an der Entladestation (80) einzustellen;
- eine erste Stop-Einrichtung (110) zum Arretieren des Fördersystems (12), wobei die ersten Schieber sich in der Entladeposition befinden;
- eine erste Entladeeinrichtung (120) um einen Befehl abzugeben, um die Stapel (4) zu entladen; wobei jeder Stapel nahe bei den entsprechenden ersten Schieber (60a) positioniert ist, mit dem er während des Entladevorgangs nicht in Konflikt kommt;
- eine erste Neu-Start-Einrichtung (130), zum erneuten Starten des ersten Fördersystems (12), dessen Geschwindigkeit in einer gesteuerten Art und Weise ansteigt; wobei der erste Schieber sich im Bezug auf den daneben liegenden Stapel (4) bewegt und sanft in Kontakt mit dem Stapel (4) gebracht wird;
wobei die erste Neu-Start-Einrichtung (130) sicherstellt, dass die Stapel (4) in der Bewegungsrichtung (G) zu der Ausgabe (1b) befördert werden;
- eine zweite Steuereinrichtung (140) zum Steuern der Bewegung des zweiten Fördersystems (13), um die zweiten Schieber (60b) auf die Entladeposition einzustellen;
- eine zweite Stop-Einrichtung (150) zum Arretieren des zweiten Fördersystems (13),
wobei die zweiten Schieber in der Entladeposition sind;
- eine zweite Entladeeinrichtung (160) zum Abgeben eines Befehls, um die Stapel (4) zu entladen; wobei jeder Stapel nahe bei dem entsprechenden zweiten Schieber (60b) positioniert ist, mit dem er während des Entladevorgangs nicht in Konflikt kommt;
- eine zweite Neu-Start-Einrichtung (170) zum erneuten Starten des zweiten Fördersystems (13), dessen Geschwindigkeit sich in einer gesteuerten Weise erhöht, wobei der zweite Schieber sich in Bezug auf den danebenliegenden Stapel (4) bewegt und sanft in Kontakt mit dem Stapel (4) gebracht wird;
wobei die zweite Neu-Start-Einrichtung (170) sicherstellt, dass die Stapel (4) in der Bewegungsrichtung (D) mit einer Geschwindigkeit zugeführt werden, die so geregelt ist, dass ein vorne liegender Schieber (60bp) der Teil der zweiten Schieber ist, neben einem hinten liegenden Schieber (60au) positioniert ist, der Teil der zweiten Schieber ist, so dass ein kontinuierlicher Strom von Stapel (4) zu der Ausgabe (1b) des Beschickungssystems sichergestellt wird.

3. Beschickungssystem nach Anspruch 2, **dadurch gekennzeichnet, dass** die erste Neu-Start-Einrichtung (130) das erste Fördersystem (12) neu startet und die Geschwindigkeit linear erhöht, und dass die zweite Neu-Start-Einrichtung (170) das zweite Fördersystem (13) neu startet und die Geschwindigkeit linear erhöht.

4. Beschickungssystem nach Anspruch 2, oder 3, **dadurch gekennzeichnet, dass** die zweite Neu-Start-Einrichtung (170) den Abstand (Ds) in Bewegungsrichtung (D) zwischen den hinten liegenden Schieber (60au) und dem vorne liegendem Schieber (60bp) so einstellt, dass er gleich dem Abstand zwischen zwei nebeneinander liegenden Schiebern (60a, 60b) ist.

5. Beschickungssystem nach einem der vorhergehenden Ansprüche, **dadurch gekennzeichnet, dass** das erste Fördersystem (12) linear ist und die Stapel (4) in einer geraden Bewegungsrichtung (D) fördert; und dass das zweite Fördersystem (13) linear ist und die Stapel (4) in der geraden Bewegungsrichtung (D) fördert.

6. Beschickungssystem nach einem der vorhergehenden Ansprüche, **dadurch gekennzeichnet, dass** die ersten Schieber (60a) und die zweiten Schieber (60b) entlang derselben Ebene (P3) bewegbar sind; und dass die elektronische Steuereinheit (90) das erste Fördersystem (12) und das zweite Fördersystem (13) so steuert, dass die ersten Schieber und die zweiten Schieber nicht längsseits positioniert sind und nicht miteinander in Kontakt kommen.

7. Beschickungssystem nach einem der vorhergehenden Ansprüche, **dadurch gekennzeichnet, dass** das erste Fördersystem (12) eine angetriebene, erste Kette (30) aufweist; dass die ersten Schieber entlang einem Abschnitt der ersten Kette (30) unter Abstand angeordnet sind und von Gliedern der ersten Kette (30) betragen werden, dass das zweite Fördersystem (13) eine angetriebene zweite Kette (34) aufweist, und dass die zweiten Schieber entlang einem Abschnitt einer zweiten Kette (34) unter Abstand angeordnet sind und von Glieder der zweiten Kette (34) getragen werden.

8. Beschickungssystem nach Anspruch 7, **dadurch gekennzeichnet, dass** jeder erste Schieber (60a) einen zentralen Körper (61) aufweist, der mit einem Glied der ersten Kette (30) durch einen entsprechenden Zapfen (62) verbunden ist, der sich von dem zentralen Körper (61) und quer zu der Bewegungsrichtung (D) der ersten Kette (30) erstreckt; das jeder zweite Schieber (60b) einen zentralen Körper (61b) aufweist, der mit einem Glied der zweiten Kette (34) durch einen entsprechenden Zapfen (62b) verbunden ist, der sich von dem zentralen Körper (61b) und quer zu der Bewegungsrichtung (D) der zweiten Kette (34) erstreckt.

9. Beschickungssystem nach Anspruch 8, **dadurch gekennzeichnet, dass** jeder erste Schieber (60a) eine Stützwand (64) aufweist, die von einem Schenkel getragen wird, der sich von dem zentralen Körper (61) weg erstreckt; wobei jede Stützwand senkrecht zu der Bewegungsrichtung (D) ist; dass jeder zweite Schieber (60b) eine Stützwand (64b) aufweist, die von einem Schenkel getragen wird, der sich von dem zentralen Körper (61b) weg erstreckt, und dass die Stützwand senkrecht zu der Bewegungsrichtung ist.

10. Verfahren zum Beschicken von Stapeln von Gegenständen an eine Verpackungsmaschine, wobei sich die Stapel (4) sequentiell in einer Bewegungsrichtung (D) bewegen, die sich zwischen einer Zulieferungseingabe (1a) und einer Ausgabe (1b) eines Beschickungssystems erstreckt, wobei die Ausgabe mit der Verpackungsmaschine in Kommunikation steht, wobei das Verfahren **dadurch gekennzeichnet ist, dass** es die Schritte umfasst:
- gleichzeitiges Zuführen einer Anzahl von Stapeln an ein erstes Fördersystem (12), das eine Anzahl von ersten Schiebern (60a) hat, um die Stapel von der Eingabe (1a) zu der Ausgabe (1b) zu bewegen;
- gleichzeitiges Zuführen einer Anzahl von Stapel an ein zweites Fördersystem (13), das zweite Schieber (60b) hat um die Stapel von der Eingabe (1a) zu der Ausgabe (1b) zu bewegen;
- Steuern (90, 110, 150) des ersten und des zweiten Fördersystems (12, 13), um die ersten Schieber oder die zweiten Schieber so einzustellen, dass sie an einer Position an der Eingabe (1a) während der Zufuhr der Stapel zu der Eingabe anhalten, während die anderen Schieber die Stapel einer vorhergehenden Anzahl von Stapel an die Ausgabe (1b) des Bewegungssystems zuführen;
- einstellen (90, 100-190) der Bewegung des ersten Fördersystems und des zweiten Fördersystems, um einen kontinuierlichen Strom von Stapeln zu der Ausgabe des Fördersystems sicherzustellen.

11. Verfahren nach Anspruch 10, **dadurch gekennzeichnet, dass** der Einstellschritt folgende Schritte aufweist:
- Steuern (100) der Bewegung des ersten Fördersystems (12), um die ersten Schieber (60a) auf eine Entladeposition an einer Entladestation (40) einzustellen, um die Stapel der Gegenstände an die Eingabe zuzuführen;
- Arretieren (110) des ersten Fördersystems (12), wobei die ersten Schieber in der Entladeposition sind;
- Aufgeben (120) eines Befehls, um die Stapel zu entladen; wobei jeder Stapel nahe bei einem entsprechenden ersten Schieber (60a) positioniert ist, mit dem er während des Entladevorgangs nicht in Konflikt kommt;
- Neustarten (130) des ersten Fördersystems (12) und Steuern der Geschwindigkeit des ersten Fördersystems, so dass jeder erste Schieber sich in Bezug auf den daneben liegenden Stapel (4) bewegt und sanft in Kontakt mit dem Stapel (4) gebracht wird;
- Zuführen der Stapel (4) in der Bewegungsrichtung (D) an die Ausgabe (1b);
- Steuern (140) der Bewegung des zweiten Fördersystems (13), um die zweiten Schieber (60b) auf die Entladeposition einzustellen;
- Arretieren (150) des zweiten Fördersystems (13), wobei die zweiten Schieber in der Entladeposition sind;
- Aufgeben (160) eines Befehls, um die Stapel (4) zu entladen, wobei jeder Stapel nah bei einem entsprechenden zweiten Schieber (60b) positioniert ist, mit dem er während des Entladevorgangs nicht in Konflikt kommt;
- Neustarten (170) des zweiten Fördersystems (13) und Steuern der Geschwindigkeit des zweiten Fördersystems, so dass jeder zweite Schieber nicht im Bezug auf den daneben liegenden Stapel (4) bewegt und sanft in Kontakt mit dem Stapel (4) gebracht wird;
- Zuführen der Stapel (4) in der Bewegungsrichtung (D) mit einer Geschwindigkeit, die so geregelt ist, dass ein vorne liegender Schieber (60bp), der Teil der zweiten Schieber ist und am nächsten zu der Ausgabe (1b) ist, neben einem hinten liegenden Schieber (60au) positioniert ist, der Teil der zweiten Schieber ist und am weitesten von der Ausgabe (1b) entfernt liegt, um einen kontinuierlichen Strom von Stapeln (4) zu der Ausgabe (1b) des Beschickungssystems sicher zu stellen.

## Revendications

1. Système d'approvisionnement pour approvisionner une machine d'emballage, et qui reçoit simultanément une pluralité de piles (4) au niveau d'une entrée (1a) et qui transporte ensuite progressivement lesdites piles dans une direction de déplacement (D) vers une sortie (1b) en communication avec ladite machine d'emballage (7), chacune desdites piles étant définies par au moins deux objets plats (5) superposés et le système d'approvisionnement étant **caractérisé par le fait qu'**il comprend :
- un premier système de transport (12) comportant une pluralité de poussoirs (60a) pour pousser lesdites piles depuis ladite entrée (1a) vers ladite sortie (1b),
- un deuxième système de transport (13) comportant une pluralité de poussoirs (60b) pour pousser lesdites piles depuis ladite entrée (1a) vers ladite sortie (1b),
lesdits premier et deuxième systèmes de transport (12, 13) étant actionnés respectivement par un premier et deuxième moyen d'entraînement (53, 45) sous le contrôle d'une unité de commande électronique (90) de manière à mettre lesdits premiers poussoirs (60a) ou lesdits seconds poussoirs (60b) dans une position d'arrêt (110, 150) au niveau de ladite entrée (1a) pendant l'arrivée de ladite pluralité de piles dans ladite entrée, tandis que lesdits autres poussoirs acheminent les piles d'une précédente pluralité de piles vers la sortie (1b) dudit système d'approvisionnement, ladite unité de commande électronique régulant le mouvement dudit premier système de transport (12) et dudit second système de transport (13) et assure ainsi un flux continu de piles (4) d'objets vers la sortie (1b) dudit système d'approvisionnement.

2. Système d'approvisionnement selon la revendication 1, **caractérisé par le fait que** ladite entrée (1a) coopère avec une station de déchargement (80) pour faire arriver lesdites piles sur lesdits premier et second systèmes de transport, ladite unité de commande électronique comprenant
- un premier moyen de commande (100) pour commander le mouvement du premier système de transport (12) afin de mettre lesdits premiers poussoirs (60a) dans une position de déchargement au niveau de ladite station de déchargement (80),
- un premier moyen d'arrêt (110) pour arrêter le premier système de transport (12) avec lesdits premiers poussoirs en position de déchargement,
- un premier moyen de déchargement (120) pour émettre un signal de commande afin de décharger les piles (4), chaque pile étant positionnée à proximité d'un premier poussoir correspondant (60a) avec lequel elle n'interfère pas pendant les opérations de déchargement,
- un premier moyen de redémarrage (130) pour redémarrer le premier système de transport (12) dont la vitesse augmente de manière contrôlée, chacun des premiers poussoirs se déplaçant par rapport à la pile (4) adjacente et étant amené doucement en contact avec ladite pile (4), ledit premier moyen de redémarrage (130) assurant que lesdites piles (4) sont poussées dans ladite direction de déplacement (D) vers ladite entrée,
- un second moyen de commande (140) pour commander le mouvement du second système de transport (13) afin de mettre lesdits seconds poussoirs (60b) dans une position de déchargement,
- un second moyen d'arrêt (150) pour arrêter le second système de transport (13) avec lesdits seconds poussoirs en position de déchargement,
- un second moyen de déchargement (160) pour émettre un signal de commande afin de décharger les piles (4), chaque pile étant positionnée à proximité d'un second poussoir correspondant (60b) avec lequel elle n'interfère pas pendant les opérations de déchargement,
- un second moyen de redémarrage (170) pour redémarrer le premier système de transport (13), dont la vitesse augmente de manière contrôlée, chacun des seconds poussoirs se déplaçant par rapport à la pile (4) adjacente et étant amené doucement en contact avec ladite pile (4), ledit second moyen de redémarrage (170) assurant le transport desdites piles dans ladite direction de déplacement (D) à une vitesse régulée de manière à ce qu'un poussoir de tête (60bp), qui fait partie des seconds poussoirs, soit positionné à proximité d'un poussoir de queue (60au), qui fait partie des premiers poussoirs, de manière à assurer un flux continu de piles (4) vers la sortie (1b) du système d'approvisionnement.

3. Système d'approvisionnement selon la revendication 2, **caractérisé par le fait que** ledit premier moyen de redémarrage (130) redémarre le premier système de transport (12) et augmente de façon linéaire la vitesse de celui-ci, et que le second moyen de redémarrage (170) redémarre le second système de transport (13) et augmente de façon linéaire la vitesse de celui-ci.

4. Système d'approvisionnement selon la revendication 2 ou 3, **caractérisé par le fait que** ledit second moyen de redémarrage (170) ajuste la distance (Ds) dans la direction de déplacement (D) entre ledit poussoir de queue (60au) et ledit poussoir de tête (60bp) de manière à ce qu'elle soit égale à la distance entre deux poussoirs adjacents (60a, 60b).

5. Système d'approvisionnement selon l'une quelconque des revendications précédentes, **caractérisé par le fait que** ledit premier système de transport (12) est linéaire et transporte lesdites piles (4) selon une direction de déplacement (D) droite, et le second système de transport (13) est linéaire et transporte lesdites piles (4) selon une direction de déplacement (D) droite.

6. Système d'approvisionnement selon l'une quelconque des revendications précédentes, **caractérisé par le fait que** lesdits premiers poussoirs (60a) et lesdits seconds poussoirs (60b) sont mobiles le long d'un même plan (P3), ladite unité de commande électronique (90) commandant le premier système de transport (12) et le second système de transport (13) de manière à ce que lesdits premiers poussoirs et lesdits seconds poussoirs ne soient pas situés côte à côté et ne viennent pas en contact les uns avec les autres.

7. Système d'approvisionnement selon l'une quelconque des revendications précédentes, **caractérisé par le fait que** ledit premier système de transport (12) comprend une première chaîne mécanique (30), lesdits premiers poussoirs étant espacés le long d'une partie de ladite première chaîne (30) et étant portés par les maillons de ladite première chaîne (30), ledit second système de transport (13) comprenant une seconde chaîne mécanique (34), et lesdits seconds poussoirs étant espacés le long d'une partie de ladite seconde chaîne (34) et étant portés par les maillons de ladite seconde chaîne (34).

8. Système d'approvisionnement selon la revendication 7, **caractérisé par le fait que** chacun des premiers poussoirs (60a) comprend un corps central (61) relié à un maillon de la première chaîne (30) par une broche correspondante (62) s'étendant à partir du corps central (61) et perpendiculairement à la direction de déplacement (D) de la première chaîne (30), chacun desdits seconds poussoirs (60b) comprenant un corps central (61b) relié à un maillon de la seconde chaîne (34) par une broche correspondante (62b) s'étendant à partir du corps central (61b) et perpendiculairement à la direction de déplacement (D) de la seconde chaîne (34).

9. Système d'approvisionnement selon la revendication 8, **caractérisé par le fait que** chacun des premiers poussoirs (60a) comprend une paroi de support (64) portée par un bras fixé audit corps central (61), ladite paroi de support étant perpendiculaire à la direction de déplacement (D), chacun des seconds poussoirs (60b) comprenant une paroi de support (64b) portée par un bras fixé audit corps central (61b) et ladite paroi de support étant perpendiculaire à la direction de déplacement (D).

10. Procédé d'approvisionnement de piles d'objets vers une machine d'emballage, lesdites piles (4) se déplaçant les unes après les autres dans une direction de déplacement (D) entre une entrée (1a) d'approvisionnement et une sortie (1b) d'un système d'approvisionnement, ladite sortie étant en communication avec ladite machine d'emballage, et le procédé étant **caractérisé par le fait qu'**il comprend les étapes suivantes consistant :
- à faire arriver simultanément une pluralité de piles sur un premier système de transport (12) comportant une pluralité de poussoirs (60a) afin de déplacer lesdites piles de ladite entrée (1a) vers ladite sortie (1b),
- à faire arriver simultanément une pluralité de piles sur un second système de transport (13) comportant une pluralité de seconds poussoirs (60b) afin de déplacer lesdites piles de ladite entrée (1a) vers ladite sortie (1b),
- à commander (90, 110, 150) ledit premier et ledit second système de transport (12, 13) de manière à mettre lesdits premiers ou lesdits seconds poussoirs en position d'arrêt au niveau de ladite entrée (1a) pendant la phase d'arrivée desdites piles dans ladite entrée, tandis que lesdits autres poussoirs transportent les piles d'une précédente pluralité de piles vers la sortie (1b) dudit système d'approvisionnement,
- à régler (90, 100 - 190) le déplacement dudit premier système de transport et dudit second système de transport afin d'assurer un flux continu de piles vers la sortie dudit système d'approvisionnement.

11. Procédé selon la revendication 10, **caractérisé par le fait que** ladite étape d'ajustement comprend les étapes suivantes consistant
- à commander (100) le mouvement du premier système de transport (12) afin de mettre lesdits premiers poussoirs (60a) dans une position de déchargement au niveau de la zone de déchargement (80) pour faire entrer lesdites piles d'objets dans ladite entrée,
- à arrêter (110) le premier système de transport (12) avec lesdits premiers poussoirs en position de déchargement,
- à envoyer (120) une commande pour décharger les piles, chacune des piles étant positionnée à proximité d'un premier poussoir (60a) correspondant, avec lequel elle n'interfère pas pendant les opérations de déchargement,
- à redémarrer (130) le premier système de transport (12) et à contrôler la vitesse du premier système de transport de manière à ce que chacun des premiers poussoirs se déplace par rapport à ladite pile (4) adjacente et est amené doucement en contact avec ladite pile (4),
- à pousser lesdites piles (4) dans la direction (D) de déplacement (D) vers ladite sortie (1b),
- à commander (140) le mouvement du second système de transport (13) afin de mettre lesdits seconds poussoirs (60b) en position de déchargement,
- à arrêter (150) le second système de transport (13) avec lesdits second poussoirs en position de déchargement,
- à envoyer (160) une commande afin de décharger les piles (4), chacune des piles étant positionnée à proximité d'un second poussoir (60b) correspondant avec lequel elle n'interfère pas pendant les opérations de déchargement,
- à redémarrer (170) le second système de transport (13) et à contrôler la vitesse du second système de transport de manière à ce que chacun des seconds poussoirs se déplace par rapport ladite pile (4) adjacente et est amené doucement en contact avec ladite pile (4),
- à pousser lesdites piles (4) dans la direction de déplacement (D) à une vitesse réglée de manière à ce qu'un poussoir de tête (60bp), qui fait partie des seconds poussoirs et qui est le plus près de la sortie (1b), soit adjacent à un poussoir de queue (60au), qui fait partie desdits premiers poussoirs et qui est le plus loin de la sortie (1b), de manière à assurer un flux continu de piles (4) vers la sortie (1b) du système d'approvisionnement.
